(19) Europäisches Patentamt

European Patent Office

Office européen des brevets

(11) **EP 3 272 119 B1**

(12) **FASCICULE DE BREVET EUROPEEN**

(45) Date de publication et mention
de la délivrance du brevet:
**10.11.2021 Bulletin 2021/45**

(21) Numéro de dépôt: **16713966.6**

(22) Date de dépôt: **15.03.2016**

(51) Int Cl.:
**H04N 13/239** (2018.01)     **H04N 13/257** (2018.01)
**H04N 13/296** (2018.01)     **G06T 7/593** (2017.01)

(86) Numéro de dépôt international:
**PCT/FR2016/050575**

(87) Numéro de publication internationale:
**WO 2016/146938 (22.09.2016 Gazette 2016/38)**

(54) **PROCÉDÉ ET DISPOSITIF DE RECONSTRUCTION 3D D'UNE SCENE**

VERFAHREN UND ANORDNUNG ZUR 3D REKONSTRUKTION EINER SZENE

METHOD AND DEVICE OF 3D RECONSTRUCTION OF A SCENE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.03.2015 FR 1552154**

(43) Date de publication de la demande:
**24.01.2018 Bulletin 2018/04**

(73) Titulaires:
• **Sorbonne Université**
**75006 Paris (FR)**
• **Centre National de la Recherche Scientifique
(CNRS)**
**75016 Paris (FR)**
• **INSERM - Institut National de la Santé et de la
Recherche Médicale**
**75013 Paris (FR)**

(72) Inventeurs:
• **SIO-HOÏ, Ieng**
**93100 Montreuil (FR)**
• **RYAD, Benosman**
**93500 Pantin (FR)**
• **BERTRAM, Shi**
**Hong Kong (CN)**

(74) Mandataire: **Plasseraud IP
66, rue de la Chaussée d'Antin
75440 Paris Cedex 09 (FR)**

(56) Documents cités:
• **PAUL ROGISTER ET AL: "Asynchronous
Event-Based Binocular Stereo Matching", IEEE
TRANSACTIONS ON NEURAL NETWORKS AND
LEARNING SYSTEMS, IEEE, PISCATAWAY, NJ,
USA, vol. 23, no. 2, 1 février 2012 (2012-02-01),
pages 347-353, XP011406609, ISSN: 2162-237X,
DOI: 10.1109/TNNLS.2011.2180025**
• **JURGEN KOGLER ET AL: "Event-Based Stereo
Matching Approaches for Frameless Address
Event Stereo Data", 26 septembre 2011
(2011-09-26), ADVANCES IN VISUAL
COMPUTING, SPRINGER BERLIN HEIDELBERG,
BERLIN, HEIDELBERG, PAGE(S) 674 - 685,
XP019166064, ISBN: 978-3-642-24027-0 abrégé
sections 3+4**
• **POSCH CHRISTOPH ET AL: "Retinomorphic
Event-Based Vision Sensors: Bioinspired
Cameras With Spiking Output", PROCEEDINGS
OF THE IEEE, IEEE. NEW YORK, US, vol. 102, no.
10, 1 octobre 2014 (2014-10-01), pages 1470-1484,
XP011559302, ISSN: 0018-9219, DOI:
10.1109/JPROC.2014.2346153 [extrait le
2014-09-16]**

**Description**

La présente invention concerne le domaine de la reconstruction 3D d'une scène, notamment lorsque celle-ci est capturée à l'aide de capteurs asynchrones.

Contrairement aux caméras classiques qui enregistrent des images successives à des instants d'échantillonnage réguliers, les rétines biologiques ne transmettent que peu d'information redondante sur la scène à visualiser, et ce de manière asynchrone.

Des capteurs de vision asynchrones basés sur événement délivrent des données numériques compressées sous forme d'événements.

Une présentation de tels capteurs peut être consultée dans « Activity-Driven, Event-Based Vision Sensors », T. Delbrück, et al., Proceedings of 2010 IEEE International Symposium on Circuits and Systems (ISCAS), pp. 2426-2429. Les capteurs de vision basés sur événement ont pour avantage d'enlever de la redondance, de réduire les temps de latence et d'augmenter la gamme de dynamique temporelle et de niveaux de gris par rapport aux caméras classiques.

La sortie d'un tel capteur de vision peut consister, pour chaque adresse de pixel, en une séquence d'événements asynchrones représentatifs des changements de réflectance de la scène au moment où ils se produisent.

Chaque pixel du capteur est indépendant et détecte des changements d'intensité lumineuse supérieurs à un seuil depuis l'émission du dernier événement (par exemple un contraste de 15% sur le logarithme de l'intensité). Lorsque le changement d'intensité dépasse le seuil fixé, un événement ON ou OFF est généré par le pixel selon que l'intensité augmente ou diminue (capteurs DVS). Certains capteurs asynchrones associent les événements détectés à des mesures absolues d'intensité lumineuse (capteurs ATIS).

Le capteur n'étant pas échantillonné sur une horloge comme une caméra classique, il peut rendre compte du séquencement des événements avec une très grande précision temporelle (par exemple de l'ordre de 1 $\mu$s). Si on utilise un tel capteur pour reconstruire une séquence d'images, on peut atteindre une cadence d'images de plusieurs kilohertz, contre quelques dizaines de hertz pour des caméras classiques.

Par ailleurs, dans le cadre de reconstruction 3D d'une scène, pour chacun des pixels des capteurs, un calcul de la position dans l'espace est réalisé. Afin de réaliser cette opération, il existe de nombreuses méthodes utilisant plusieurs caméras ou autres capteurs classiques. Dès lors, ces méthodes réalisent des déterminations à l'aide d'images 2D classiques dans lesquelles les pixels possèdent au moins une valeur (i.e. sont définies).

Pour les capteurs asynchrones, tels que définis précédemment, de telles méthodes sont inapplicables par nature, car aucune image 2D « classique » n'est disponible en sortie des capteurs : afin d'utiliser ces méthodes, il serait nécessaire de « reconstruire » artificiellement des images 2D à partir des informations asynchrones des capteurs. Néanmoins, cette reconstruction peut être lourde et la manipulation d'images complètes peut nécessiter des moyens de traitement conséquents. De plus, cette reconstruction discrétise l'information temporelle et ainsi, la dépendance temporelle de l'information visuelle est pratiquement ignorée.

Dès lors, il existe un besoin pour le développement de méthodes de reconstruction de scène en 3D, méthodes adaptées aux capteurs asynchrones.

La présente invention vise à améliorer la situation.

Des exemples et des modes de réalisation peuvent être trouves dans PAUL ROGISTER et al.: "Asynchronous Event-Based Binocular Stereo Matching", KOGLER et al. "Event-Based Stereo Matching Approaches for Frameless Address Event Stereo Data", et POSCH et al. "Retinomorphic Event-Based Vision Sensors: Bioinspired: Cameras With Spiking Output".

À cet effet, la présente invention propose une méthode spécialement adaptée aux capteurs asynchrones pour reconstruire des scènes observées en 3D, telle que définie dans les revendications.

La présente invention vise alors un procédé de reconstruction 3D d'une scène, le procédé comprenant :

- réception d'une première information asynchrone d'un premier capteur asynchrone ayant une première matrice de pixels disposée au regard de la scène, la première information asynchrone comprenant, pour chaque pixel de la première matrice, des premiers événements successifs provenant dudit pixel ;

- réception d'une deuxième information asynchrone d'un deuxième capteur asynchrone ayant une deuxième matrice de pixels disposée au regard de la scène, la deuxième information asynchrone comprenant, pour chaque pixel de la deuxième matrice, des deuxièmes événements successifs dudit pixel, le deuxième capteur asynchrone étant distinct du premier capteur asynchrone; et

- appariement d'un premier événement parmi les premiers événements successifs avec un deuxième événement parmi les deuxièmes événements successifs en fonction d'une minimisation d'une fonction coût ; dans lequel la fonction coût comporte au moins :

- une composante de luminance, ladite composante de luminance étant fonction au moins :

  - d'un premier signal de luminance provenant d'un pixel du premier capteur asynchrone convolué avec un noyau de convolution, la luminance dudit pixel étant fonction d'un écart entre des maximums dudit premier signal ; et
  - d'un deuxième signal de luminance provenant d'un pixel du deuxième capteur asynchrone convolué avec ledit noyau de convolution, la luminance dudit pixel étant fonction d'un écart entre des maximums dudit deuxième signal ;

- et une composante de mouvement, ladite composante de mouvement étant fonction au moins :

  - de valeurs temporelles relatives à la survenance d'événements spatialement localisés à une distance prédéterminée d'un pixel du premier capteur asynchrone; et
  - de valeurs temporelles relatives à la survenance d'événements spatialement localisés à une distance prédéterminée d'un pixel du deuxième capteur asynchrone;

  la fonction coût étant une somme d'au moins une composante de luminance et une composante de mouvement.

Ainsi, il n'est pas nécessaire, pour la reconstruction des scènes en 3D capturées à l'aide de plusieurs capteurs asynchrones de type DVS ou ATIS, de recréer des images 2D classiques pour l'utilisation des méthodes de l'art antérieur applicable à ces images.

Dès lors la précision d'une telle reconstruction 3D est très précise/grande, l'information temporelle asynchrone étant beaucoup plus précisément échantillonnée.

Par ailleurs, la fonction coût peut comporter en outre:

- une composante temporelle, ladite composante temporelle étant fonction d'une différence entre :

  - une valeur temporelle relative à un événement du premier capteur;
  - une valeur temporelle relative à un événement du deuxième capteur.

Il est ainsi possible d'éviter que des événements temporellement trop éloignés puissent être associés.

Dans un mode de réalisation particulier, la fonction coût peut comporter en outre:

- une composante géométrique, ladite composante géométrique étant fonction :

  - d'une distance spatiale d'un pixel du deuxième capteur à une droite épipolaire ou à une intersection de droites épipolaires définies par au moins un pixel du premier capteur.

Il est ainsi possible d'éviter que des événements ne correspondant pas au même point X(t) de la scène puissent être associés.

Avantageusement, le signal de luminance du pixel du premier capteur et du pixel du deuxième capteur comportant un maximum codant un temps de survenance d'une variation de luminance, le noyau de convolution peut être une gaussienne de variance prédéterminée.

Dans une réalisation particulière, ladite composante de luminance peut être fonction en outre :

- de signaux de luminance de pixels du premier capteur spatialement localisés à une distance prédéterminée du premier pixel du premier capteur convolué avec le noyau de convolution ; et

- de signaux de luminance de pixels du deuxième capteur spatialement localisés à une distance prédéterminée du deuxième pixel du deuxième capteur convolué avec le noyau de convolution.

Dès lors, la prise en compte d'événements proches des pixels à associer permet de vérifier qu'il existe une correspondance d'ensemble et que le fait d'obtenir une correspondance locale pour deux pixels n'est pas un simple artefact ou une simple singularité.

De plus, ladite composante de mouvement peut être fonction en outre :

- d'une valeur moyenne des valeurs temporelles relatives à la survenance d'événements de pixels du premier capteur spatialement localisés à une distance prédéterminée du pixel du premier capteur ;

- d'une valeur moyenne des valeurs temporelles relatives à la survenance d'événements de pixels du deuxième capteur spatialement localisés à une distance prédéterminée du pixel du deuxième capteur.

Dans un mode de réalisation particulier, ladite composante de mouvement peut être fonction, pour un temps donné :

- pour chaque valeur temporelle courante relative à la survenance d'événements spatialement localisés à une distance prédéterminée d'un pixel du premier capteur, d'une valeur fonction de manière décroissante d'une distance dudit temps donné à ladite valeur temporelle courante ;
- pour chaque valeur temporelle courante relative à la survenance d'événements spatialement localisés à une distance prédéterminée d'un pixel du deuxième capteur, d'une valeur fonction de manière décroissante d'une distance dudit temps donné à ladite valeur temporelle courante.

Dans un mode de réalisation alternatif, ladite composante de mouvement peut être fonction :

- d'une première convolution d'une fonction décroissante avec un signal comportant un Dirac pour chaque valeur temporelle relative à la survenance d'événements spatialement localisés à une distance prédéterminée d'un pixel du premier capteur ;
- d'une deuxième convolution d'une fonction décroissante avec un signal comportant un Dirac pour chaque valeur temporelle relative à la survenance d'événements spatialement localisés à une distance prédéterminée d'un pixel du deuxième capteur.

La présente invention vise également un dispositif de reconstruction 3D d'une scène, le procédé comprenant :

- une interface pour la réception d'une première information asynchrone d'un premier capteur asynchrone ayant une première matrice de pixels disposée au regard de la scène, la première information asynchrone comprenant, pour chaque pixel de la première matrice, des premiers événements successifs provenant dudit pixel ;
- une interface pour la réception d'une deuxième information asynchrone d'un deuxième capteur asynchrone ayant une deuxième matrice de pixels disposée au regard de la scène, la deuxième information asynchrone comprenant, pour chaque pixel de la deuxième matrice, des deuxièmes événements successifs provenant dudit pixel, le deuxième capteur asynchrone étant distinct du premier capteur asynchrone; et
- un processeur adapté pour l'appariement d'un premier événement parmi les premiers événements successifs avec un deuxième événement parmi les deuxièmes événements successifs en fonction d'une minimisation d'une fonction coût ;

dans lequel la fonction coût comporte au moins :

- une composante de luminance, ladite composante de luminance étant fonction au moins :

  - d'un premier signal de luminance provenant d'un pixel du premier capteur asynchrone convolué avec un noyau de convolution, la luminance dudit pixel étant fonction d'un écart entre des maximums dudit premier signal ; et
  - d'un deuxième signal de luminance provenant d'un pixel du deuxième capteur asynchrone convolué avec ledit noyau de convolution, la luminance dudit pixel étant fonction d'un écart entre des maximums dudit deuxième signal ;

- et une composante de mouvement, ladite composante de mouvement étant fonction au moins :

  - de valeurs temporelles relatives à la survenance d'événements spatialement localisés à une distance prédéterminée d'un pixel du premier capteur asynchrone; et
  - de valeurs temporelles relatives à la survenance d'événements spatialement localisés à une distance prédéterminée d'un pixel du deuxième capteur asynchrone;

la fonction coût étant une somme d'au moins une composante de luminance et une composante de mouvement.

Un programme informatique, mettant en œuvre tout ou partie du procédé décrit ci-avant, installé sur un équipement préexistant, est en lui-même avantageux.

Ainsi, la présente invention vise également un programme informatique comportant des instructions pour la mise en œuvre du procédé précédemment décrit, lorsque ce programme est exécuté par un processeur.

Ce programme peut utiliser n'importe quel langage de programmation (par exemple, un langage-objet ou autre), et être sous la forme d'un code source interprétable, d'un code partiellement compilé ou d'un code totalement compilé.

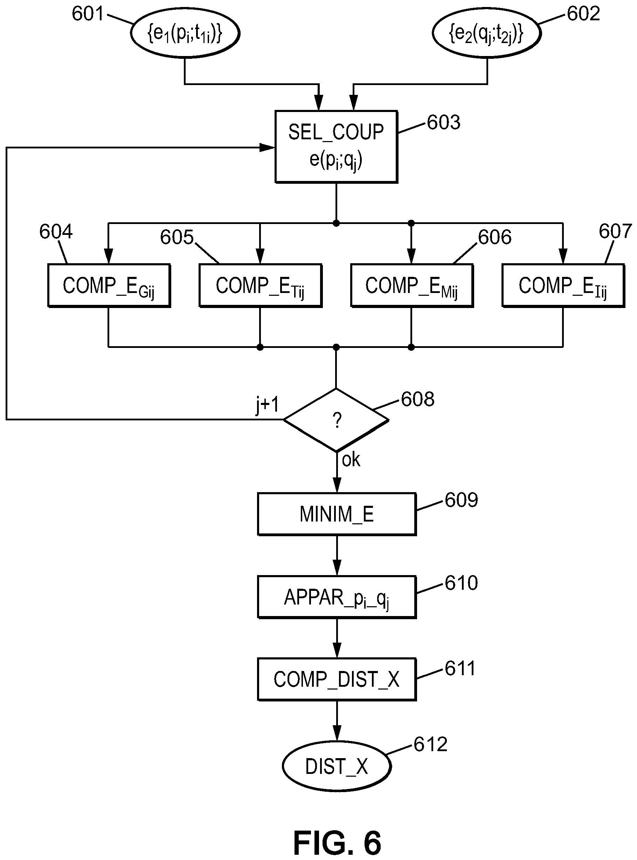

La figure 6 décrite en détail ci-après peut former l'organigramme de l'algorithme général d'un tel programme informatique.

D'autres caractéristiques et avantages de l'invention apparaîtront encore à la lecture de la description qui va suivre. Celle-ci est purement illustrative et doit être lue en regard des dessins annexés sur lesquels :

- la figure 1 est un schéma synoptique d'un capteur asynchrone de lumière de type ATIS ;

- la figure 2 est un diagramme montrant des événements générés par un capteur asynchrone placé en regard d'une scène comportant une étoile tournante ;

- la figure 3 est un exemple du calcul d'une composante de luminance pour deux points de deux capteurs distincts ;

- les figures 4a et 4b sont des exemples de représentation d'un signal d'activité d'un pixel donné ;

- la figure 4c est une représentation de cartes de mouvement générées à l'aide de capteurs asynchrones distincts ;

- les figures 5a et 5b sont des représentations d'exemples de calcul de composantes géométriques dans un mode de réalisation de l'invention ;

- la figure 6 illustre un ordinogramme présentant un mode de réalisation selon l'invention ;

- la figure 7 illustre un dispositif pour la mise en œuvre d'un mode de réalisation selon l'invention.

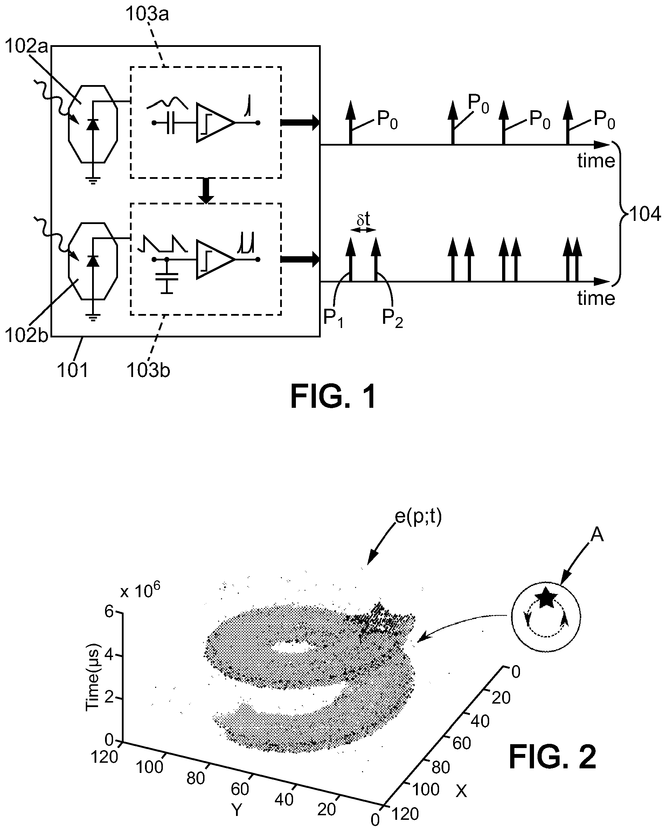

La figure 1 illustre le principe de l'ATIS.

Un pixel 101 de la matrice constituant le capteur comporte deux éléments photosensibles 102a, 102b, tels que des photodiodes, respectivement associés à des circuits électroniques de détection 103a, 103b.

Le capteur 102a et son circuit 103a produisent une impulsion $P_0$ lorsque l'intensité lumineuse reçue par la photodiode 102a varie d'une quantité prédéfinie.

L'impulsion $P_0$ marquant ce changement d'intensité déclenche le circuit électronique 103b associé à l'autre photodiode 102b. Ce circuit 103b génère alors une première impulsion $P_1$ puis une deuxième impulsion $P_2$ dès qu'une quantité de lumière donnée (nombre de photons) est reçue par la photodiode 102b.

L'écart temporel $\delta t$ entre les impulsions $P_1$ et $P_2$ est inversement proportionnel à l'intensité lumineuse reçue par le pixel 101 juste après l'apparition de l'impulsion $P_0$.

L'information asynchrone issue de l'ATIS comprend deux trains impulsions combinées pour chaque pixel (104) : le premier train d'impulsions $P_0$ indique les instants où l'intensité lumineuse a changé au-delà du seuil de détection, tandis que le second train se compose des impulsions $P_1$ et $P_2$ dont l'écart temporel $\delta t$ indique les intensités lumineuses, ou niveaux de gris, correspondants.

Un événement $e(\boldsymbol{p}, t)$ issu d'un pixel 101 de position p dans la matrice de l'ATIS comporte alors deux types d'information: une information temporelle donnée par la position de l'impulsion Po, donnant l'instant t de l'événement, et une information de niveau de gris donnée par l'écart temporel $\delta t$ entre les impulsions $P_1$ et $P_2$.

On peut alors placer les événements provenant des pixels dans une représentation espace-temps à trois dimensions telle que celle présentée sur la figure 2. Sur cette figure, chaque point $\boldsymbol{p}$ repère un événement $e(\boldsymbol{p}, t)$ engendré de manière asynchrone à un instant t au niveau d'un pixel p du capteur, de position $= \begin{pmatrix} x \\ y \end{pmatrix}$, par le mouvement d'une étoile tournant à vitesse angulaire constante comme schématisé dans l'encadré A. La majeure partie de ces points se répartissent à proximité d'une surface de forme générale hélicoïdale. En outre, la figure montre un certain nombre d'événements à distance de la surface hélicoïdale qui sont mesurés sans correspondre au mouvement effectif de l'étoile. Ces événements sont du bruit d'acquisition.

Les événements $e(\boldsymbol{p},t)$ peuvent alors être définis par l'ensemble des informations suivantes :

$$e(\boldsymbol{p}, t) = \begin{cases} \boldsymbol{p} \in \mathcal{C} \subset \mathbb{R}^2 \\ pol \\ I(\boldsymbol{p}, t) \end{cases}$$

avec C le domaine spatial du capteur, *pol* la polarité représentant la direction du changement de luminance (ex. 1 pour une augmentation ou -1 pour une diminution) et $I(p, t)$ le signal d'intensité lumineuse du point $p$ à l'instant t.

Le signal d'intensité lumineuse peut être ainsi l'ensemble des trains d'impulsions combinées 104 tel que décrit en Figure 1. Si $t_u$ représente le temps de survenance de l'événement, et l'écart entre $t_{e+,u}$ et $t_{e-,u}$ représente une valeur inversement proportionnelle à l'intensité lumineuse reçue, il est possible de coder l'intensité à l'aide de trois Dirac $\delta$ de telle sorte que $I(p, t) = \delta(t - t_u) + \delta(t - t_{e+,u}) + \delta(t - t_{e-,u})$. Le signal d'intensité du pixel situé à la coordonnée $p$ permet alors de coder temporellement les informations de luminance. Cette information peut être directement issue du circuit électronique du capteur avec un minimum de transformation.

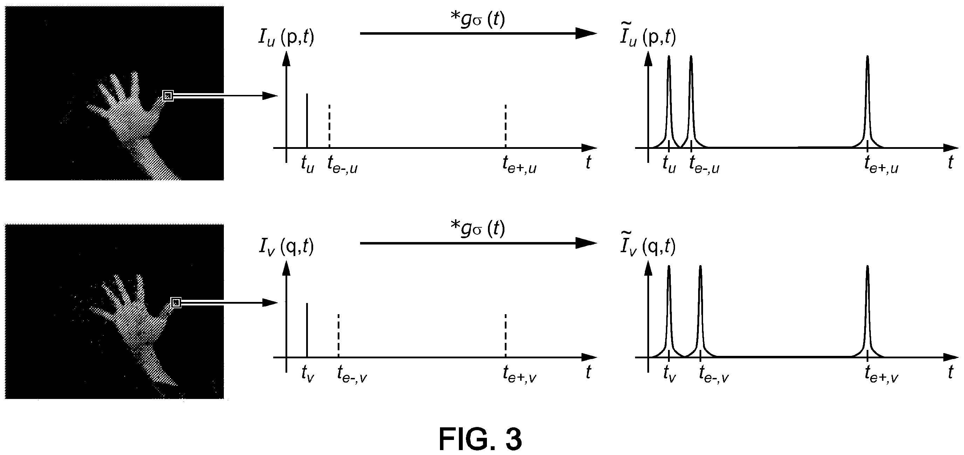

La figure 3 est un exemple du calcul d'une composante de luminance pour deux points $p$ et $q$ de deux capteurs $u$ et $v$ distincts.

Afin de déterminer si deux points $p$ et $q$ de deux capteurs correspondent au même point de la scène observée, il est fait l'hypothèse que les surfaces composant la scène observée sont des surfaces de Lambert (i.e. des surfaces dont la luminance est la même quel que soit l'angle d'observation).

Dès lors, pour ces surfaces, l'intensité doit être la même sur les deux capteurs à un même instant, soit $I_u(p, t) = I_v(q, t)$.

Il est, par exemple, possible de calculer une corrélation entre ces deux signaux $I_u(p, t)$ et $I_v(q, t)$.

Afin de pouvoir comparer simplement les signaux d'intensité lumineuse composés de Dirac, il peut être avantageux de convoluer ces signaux par un noyau $g_\sigma(t)$ de support non vide. Il est alors possible de calculer une corrélation entre les deux signaux

$$I_u(\boldsymbol{p}, t) * g_\sigma(t) = \widetilde{I_u}(\boldsymbol{p}, t) \text{ et } I_v(\boldsymbol{q}, t) * g_\sigma(t) = \widetilde{I_v}(\boldsymbol{p}, t).$$

Par ailleurs, il peut être utile de ne pas limiter la comparaison de deux uniques points, mais de prendre également en compte les points situés à proximité de $p$ et de $q$ (i.e. situés à une distance prédéterminée de $p$ ou $q$, distance au sens mathématique du terme) : l'ensemble des points à proximité de $p$ définissent un ensemble $v_u(p)$ et l'ensemble des points à proximité de $q$ définissent un ensemble $v_v(q)$ (N est le cardinal de ces ensembles). Ainsi, la composante de luminance peut être exprimée comme suit :

$$E_I = 1 - \frac{1}{N} \sum_{\substack{\boldsymbol{p_i} \in \nu_u(\boldsymbol{p}) \\ \boldsymbol{q_i} \in \nu_v(\boldsymbol{q})}} \frac{\int_{-\infty}^{+\infty} \widetilde{I_u}(\boldsymbol{p_i}, t)\widetilde{I_v}(\boldsymbol{q_i}, t)dt}{\sqrt{\int_{-\infty}^{+\infty} \widetilde{I_u}(\boldsymbol{p_i}, t)^2 dt}\sqrt{\int_{-\infty}^{+\infty} \widetilde{I_v}(\boldsymbol{q_i}, t)^2 dt}}$$

Bien entendu, il est possible de réduire les bornes d'intégration en définissant $\omega$ le support des fonctions convoluées $\widetilde{I}(.)$ pour l'ensemble des points situés à proximité $p$ ou $q$ tels que définis plus haut.

$$E_I = 1 - \frac{1}{N} \sum_{\substack{\boldsymbol{p_i} \in \nu_u(\boldsymbol{p}) \\ \boldsymbol{q_i} \in \nu_v(\boldsymbol{q})}} \frac{\int_{\omega} \widetilde{I_u}(\boldsymbol{p_i}, t)\widetilde{I_v}(\boldsymbol{q_i}, t)dt}{\sqrt{\int_{\omega} \widetilde{I_u}(\boldsymbol{p_i}, t)^2 dt}\sqrt{\int_{\omega} \widetilde{I_v}(\boldsymbol{q_i}, t)^2 dt}}$$

Enfin, il est possible de généraliser cette formule en utilisant plus de deux capteurs. Par exemple, avec Q capteurs {$u$, $v$, $w$, ...}, il est possible d'écrire :

$$E_I = 1 - \frac{1}{(Q-1)N} \sum_{\substack{\boldsymbol{p_i} \in \nu_u(\boldsymbol{p}) \\ \boldsymbol{q_{ci}} \in \nu_c(\boldsymbol{q_c}) \\ c \in \{v, w, \dots\}}} \frac{\int_{\omega} \widetilde{I_u}(\boldsymbol{p_i}, t)\widetilde{I_c}(\boldsymbol{q_{ci}}, t)dt}{\sqrt{\int_{\omega} \widetilde{I_u}(\boldsymbol{p_i}, t)^2 dt}\sqrt{\int_{\omega} \widetilde{I_c}(\boldsymbol{q_{ci}}, t)^2 dt}}$$

Le noyau $g_\sigma(t)$ est avantageusement une gaussienne de variance $\sigma$. Il peut également être une fonction porte de largeur $\sigma$.

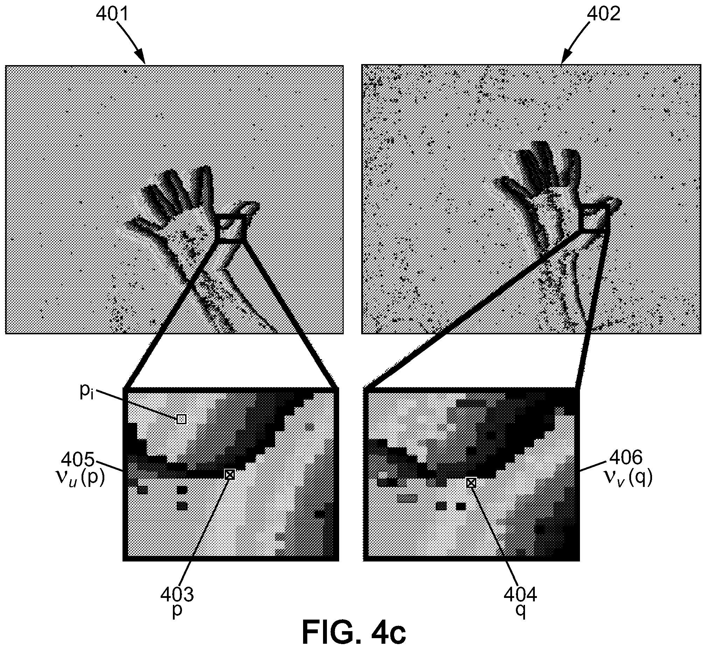

La figure 4c est une représentation de cartes 401 et 402 générées à l'aide de capteurs asynchrones distincts.

Pour la génération de ces cartes, il est possible de définir la fonction S comme la somme, pour chaque événement

$$ev_p(i) = \begin{cases} \boldsymbol{p_i} = \boldsymbol{p} \\ pol_i = pol \\ \quad t_p \end{cases}$$

d'un pixel $p$ donné et pour une polarité *pol* donnée, à un instant t donné, de la fonction primitive $S_{prim}(\boldsymbol{p}, pol, t) = \begin{cases} \max\big(\text{h} + \theta.(t_p - t), 0\big) \text{ si } t \geq t_p \\ \qquad\qquad 0 \text{ sinon} \end{cases}$ , $h$ étant une valeur prédéterminée et $\theta$ étant un facteur prédéterminé correspondant à la vitesse de la décroissance de, la fonction primitive.

La « somme » de la fonction primitive peut être également vue mathématiquement comme une convolution :

- de la fonction primitive $S_{prim}(\boldsymbol{p}, t) = \begin{cases} \max(\text{h} - \theta.t, 0) \text{ si } t \geq 0 \\ \qquad\quad 0 \text{ sinon} \end{cases}$ (ou plus généralement de toute fonction décroissante),

- avec un signal comportant un Dirac pour chaque temps $t_p$ auquel un événement $ev_p(i) = \begin{cases} \boldsymbol{p_i} = \boldsymbol{p} \\ pol_i = pol \\ \quad t_p \end{cases}$ est survenu.

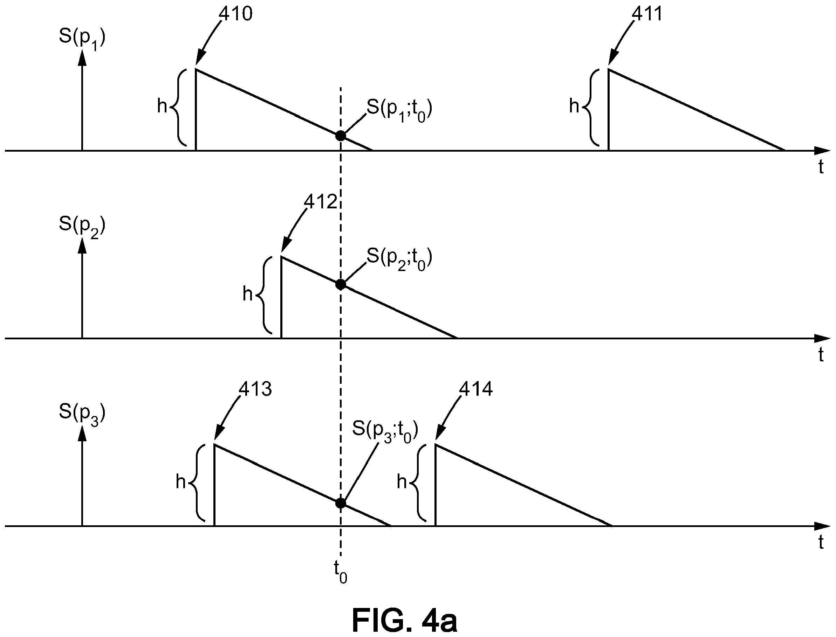

A titre d'illustration, la figure 4a montre trois signaux d'activité possibles $t \rightarrow S$, pour trois pixels $p_1$, $p_2$ et $p_3$ du capteur (et pour une valeur de polarité *pol* donnée).

En l'absence d'événements, la valeur de $S(p_1, t)$, $S(p_2, t)$ ou $S(p_3, t)$ est nulle. Néanmoins, lors de la survenance d'un événement de polarité *pol* (par exemple, 410) au niveau du pixel $p_1$, $S(p_1, t)$ prend une valeur seuil prédéterminé (ici h, cette valeur h pouvant être unitaire).

La valeur du signal d'activité $S(p_1, t)$ décroît alors progressivement après cet événement pour tendre vers 0.

Il en va de même pour l'événement 411 pour le pixel $p_1$, pour l'événement 412 pour le pixel $p_2$, ou pour l'événement 413/414 pour le pixel $p_3$,

Si la décroissance du signal d'activité S est ici linéaire, il est possible de prévoir tout type de décroissance comme une décroissance exponentielle :

$$h.e^{-\frac{t-t_p}{\tau}}$$

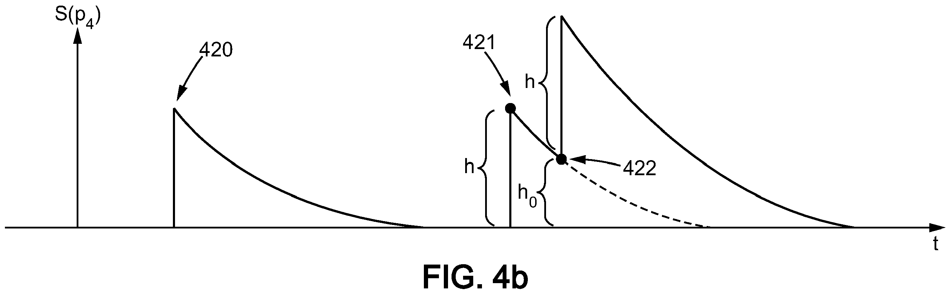

Cette décroissance exponentielle peut être illustrée par la figure 4b (voir la courbe 4b et l'événement 320).

Par ailleurs, il est possible que, lors de la survenance d'un événement pour le pixel considéré (ex. $p_4$ ici), la valeur de la fonction S ne soit pas négligeable par rapport à la valeur de h (ex. l'événement 421 est temporellement proche de l'événement 422).

Dans un mode de réalisation, lors de la survenance de l'événement ultérieur 422, la valeur du signal d'activité S peut être fixée à la somme (éventuellement pondérée) de la valeur courante de S juste avant l'événement 422 (i.e. ho) et de h. Ainsi, la décroissance de la courbe S partira de la valeur h+ho comme le montre la figure 4b. Par ailleurs, il est possible de prévoir que la valeur de h+ho soit capée à une valeur h1 prédéterminée (i.e. min(h_1, h+ho))

Dans un autre mode de réalisation, lors de la survenance de l'événement ultérieur 422, la valeur de la courbe S est fixée à la valeur h quel que soit la valeur de ho (i.e. les événements antérieurs au dernier événement (i.e. l'événement ultérieur) sont ignorés). Dans cet autre mode de réalisation, il est possible de définir un temps dit « temps de dernier événement » défini comme suit :

$$T(\boldsymbol{p}, pol, i) = \max\big(t_j\big) \,|\, j < i$$

ou

$$T(\boldsymbol{p}, pol, t) = \max\big(t_j\big) \,|\, t_j < t$$

avec $t_j$ les temps d'événements survenant pour le pixel pour un pixel $\boldsymbol{p}$ avec la polarité *pol*.

Conceptuellement, $\boldsymbol{p} \rightarrow T(\boldsymbol{p}, pol, t)$ définit une carte des temps des derniers événements de même polarité survenus temporellement juste avant un temps de référence (i.e. $t$).

On peut alors définir, dans cet autre mode de réalisation, $p \rightarrow S(p, pol, t)$ comme étant une fonction de cet ensemble de temps $T(p, pol, t)$.

Par exemple, $p \rightarrow S(p, pol, t)$ :

$$p \rightarrow S(p, pol, t): \begin{cases} h.\, e^{-\frac{t-T(p,pol,t)}{\tau}} \text{si } t \geq T(p, pol, t) \\ 0 \text{ sinon} \end{cases}$$

avec $\tau$ et h une constante temporelle prédéterminée ($S$ peut être toute fonction décroissante avec le temps t sur un intervalle comprenant comme borne inférieure $T(p, pol, t)$).

La création d'une carte S de pixels représentative de la « fraicheur » d'événements de ces pixels est avantageuse, car elle permet une représentation continue et simple de concepts discontinus (i.e. les événements). Cette carte créée permet de transformer la représentation des événements dans un domaine simple d'appréhension.

Dès lors, sa création simplifie la manipulation et la comparaison des événements.

.Cette fonction S est représentative d'une « fraicheur » des événements survenus pour ce pixel.

Les cartes 401 et 402 de la figure 4c sont des représentations de cette fonction $S$ pour un temps t donné et pour deux capteurs asynchrones capturant le mouvement d'une même main à partir de deux points de vue différents.

Les points les plus foncés représentent des points dont les derniers événements sont les plus récents par rapport au temps t (i.e. ayant la valeur de S la plus grande).

Les points les plus clairs représentent des points dont les derniers événements sont les plus lointains par rapport au temps t (i.e. ayant la valeur de S la plus petite, le fond de l'image est grisé pour faire ressortir plus facilement les valeurs clairs bien que le fond corresponde à des valeurs nulles de la fonction $S$).

Les points foncés dispersés correspondent à un bruit de capture des capteurs.

Pour chaque événement survenant à la date $t_0$, il est possible de déterminer une carte de mouvement pour les pixel $p$. Dès lors chaque pixel $p$ de la carte possède comme valeur $S(p, t_0)$.

Afin de déterminer si deux points $p$ et $q$ de deux capteurs correspondent au même point de la scène observée, il est supposé que la valeur de S des deux capteurs aux points respectifs $p$ et $q$ seront similaires (cela n'est pas nécessairement le cas dans certaines situations limites) soit $S(p) = S(q)$ ou tout du moins $S(p) \approx S(q)$.

Il est, par exemple, possible de calculer une corrélation entre ces deux valeurs S($p$) et S(q)

Par ailleurs, il peut être utile de ne pas limiter la comparaison de deux uniques points, mais de prendre également en compte les points situés à proximité de $p$ (403) et de $q$ (404) (i.e. situés à une distance prédéterminée de $p$ ou $q$, distance au sens mathématique du terme) : l'ensemble des points à proximité de $p$ définissent un ensemble $v_u(p)$ (405) et l'ensemble des points à proximité de $q$ définissent un ensemble $v_v(q)$ (406) (N est le cardinal de ces ensembles).

Il est possible de déterminer la corrélation des deux cartes 405 et 406 à proximité des points $p$ et $q$. De plus, il est possible, afin de s'affranchir de toute déviation temporelle d'un capteur, de soustraire à chacun des flots optiques 405 et 406 leur moyenne respective (respectivement $\overline{S_u}(p)$ et $\overline{S_v}(q)$).

Ainsi, la composante de mouvement, pour un instant t donné, peut être exprimée comme suit :

$$E_M = 1 - \frac{1}{2} \sum_{i=1}^{N} \frac{\left(S_u(p_i) - \overline{S_u}(p)\right)\left(S_v(q_i) - \overline{S_v}(q)\right)}{|S_u(p_i) - \overline{S_u}(p)||S_v(q_i) - \overline{S_v}(q)|}$$

avec i l'index d'un point dans l'ensemble $v_u(p)$ et d'un point dans l'ensemble $v_v(q)$.

Enfin, il est possible de généraliser cette formule en utilisant plus de deux capteurs. Par exemple, avec Q capteurs {$u$, $v$, $w$, ...}, il est possible d'écrire (en utilisant les mêmes notations que précédemment pour la composante de luminance) :

$$E_M = 1 - \frac{1}{Q-1} \sum_{c \in \{v,w,...\}} \sum_{i=1}^{N} \frac{\left(S_u(p_i) - \overline{S_u}(p)\right)\left(S_c(q_{ci}) - \overline{S_c}(q_c)\right)}{|S_u(p_i) - \overline{S_u}(p)||S_c(q_{ci}) - \overline{S_c}(q_c)|}$$

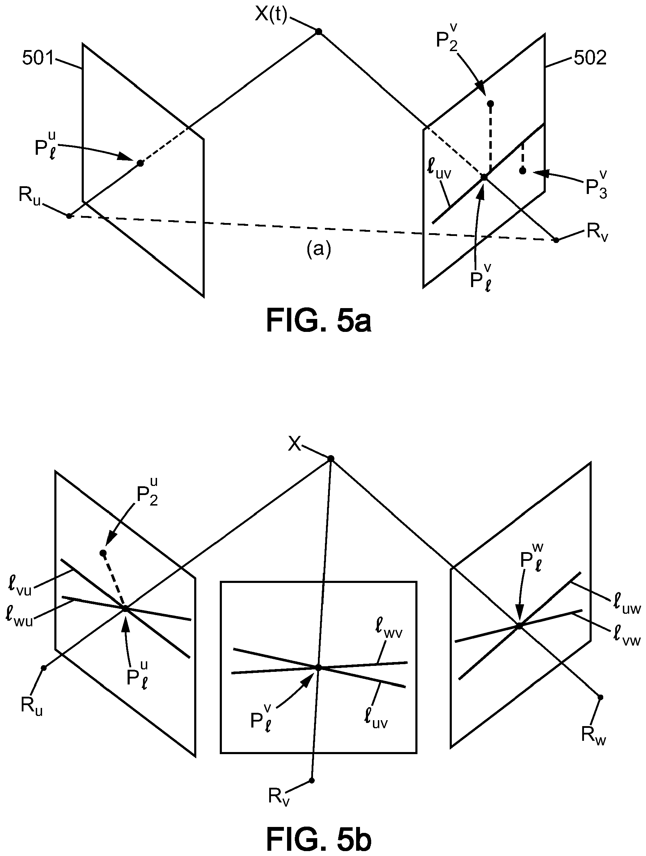

Les figures 5a et 5b sont des représentations d'exemples de calcul de composantes géométriques dans un mode de réalisation de l'invention.

Lorsque deux capteurs 501 et 502 sont en regard d'une même scène (ex. d'une scène comportant le point X(t), voir Figure 5a), et si le point $p_1^u$ du premier capteur 501 représentatif du point X(t) (i.e. le point $p_1^u$, X(t) et $R_u$ sont alignés), il est possible de définir une droite épipolaire $l_{uv}$ sur le capteur 502.

$R_u$ est le centre de projection du capteur 501 et $R_v$ est le centre de projection du capteur 502.

Cette droite épipolaire $l_{uv}$ est définie comme étant l'intersection du plan (X(t), $R_u$, $R_v$) avec le capteur 502.

De manière plus générale, un point $p$ du premier capteur 501 définit une droite épipolaire $l_v(p)$ sur le deuxième capteur 502 et un point $q$ du deuxième capteur 502 définit une droite épipolaire $l_u(q)$ sur le premier capteur 501.

Dès lors, il est possible de définir une composante géométrique pour deux points $p$ et $q$ du premier et deuxième capteurs :

$$E_G = \frac{1}{2\epsilon_g}\big(d(\boldsymbol{p}, \boldsymbol{l_u(q)}) + d(\boldsymbol{q}, \boldsymbol{l_v(p)})\big)$$

Si le dispositif de prises de vues comporte trois capteurs (voir Figure 3b), deux droites épipolaires peuvent être définies par capteur, ces droites étant définies par les points considérés sur les deux autres capteurs. Ainsi, ces deux droites épipolaires possèdent alors une intersection, que l'on appelle ci-dessous intersection épipolaire. Dès lors :

- un point $p$ du premier capteur et un point $q$ du deuxième capteur définissent une intersection épipolaire $i_w(p, q)$ sur le troisième capteur ;

- un point $p$ du premier capteur et un point r du troisième capteur définissent une intersection épipolaire $i_v(p, r)$ sur le deuxième capteur ;

- un point $q$ du deuxième capteur et un point r du troisième capteur définissent une intersection épipolaire $i_u(q, r)$ sur le premier capteur.

Ainsi, il est possible de définir une composante géométrique pour trois points $p, q$ et r du premier, deuxième et troisième capteurs :

$$E_G = \frac{1}{3\epsilon_g}\big(d(\boldsymbol{p}, \boldsymbol{i_u(q, r)}) + d(\boldsymbol{q}, \boldsymbol{i_v(p, r)}) + d(\boldsymbol{r}, \boldsymbol{i_w(p, q)})\big)$$

avec $\epsilon_g$ une valeur prédéterminée d'une distance représentative d'un écart géométrique maximale acceptable.

Si le dispositif de prises de vues comporte plus de trois capteurs (ex. Q capteurs), il est possible de généraliser la formule précédente en considérant que l'intersection épipolaire d'un capteur est le point situé au plus près de l'ensemble des droites épipolaires définies sur ce capteur par les points courants des autres capteurs (par exemple, en minimisant la somme des distances ou en minimisant le carré des distances desdit points aux droites épipolaires).

$$E_G = \frac{1}{Q\epsilon_g}\left(\sum_{c\in\{u,v,w,\dots\}} d\big(\boldsymbol{p_c}, \boldsymbol{i_c}(\{\boldsymbol{p_d}\}_{d\in\{u,v,w,\dots\}\setminus c})\big)\right)$$

Il est également possible de déterminer une composante temporelle pour un événement $e(\boldsymbol{p}, t_u)$ du premier capteur et un événement $e(\boldsymbol{q}, t_v)$ du deuxième capteur :

$$E_T = \frac{|t_u - t_v|}{\epsilon_t}$$

avec $\epsilon_t$ un nombre ayant la dimension d'un temps et représentatif d'un écart temporel maximal acceptable entre ces deux événements.

Si le dispositif de prises de vues comporte plus de trois capteurs (ex. Q capteurs), il est possible de généraliser la formule précédente :

$$E_T = \frac{\sum_{c=\{v,w,\dots\}}|t_u - t_c|}{Q\epsilon_t}$$

La figure 6 illustre un ordinogramme présentant un mode de réalisation selon l'invention.

Sur réception de deux ensembles d'événements asynchrones 601 et 602 provenant de deux capteurs asynchrones distincts et mis en regard d'une même scène, il est possible de sélectionner deux événements de ces capteurs (étape 603, définis par le pixel $p_i$ et le temps $t_{1i}$ pour le premier capteur et le pixel $q_j$ et le temps $t_{2j}$ pour le deuxième capteur).

Une fois ces événements sélectionnés, il est possible de déterminer au moins une composante parmi les composantes suivantes, comme évoqué ci-avant :

- une composante géométrique (étape 604) ;

- une composante temporelle (étape 605) ;

- une composante de mouvement (étape 606) ;

- une composante de luminance (étape 607).

Pour un événement $e_1(p_i, t_{1i})$ fixé pour le premier capteur, il est possible d'itérer (test 608, sortie j+1) sur un grand nombre d'événement $e_2(q_j, t_{2j})$ (en faisant varier l'index j, par exemple) : les itérations peuvent viser l'ensemble des événements du deuxième capteur ou avantageusement seulement un sous-ensemble de ces événements (par exemple, uniquement ceux situés à une distance géométrique prédéterminée de la droite épipolaire ou de l'intersection épipolaire définie par au moins $p_i$ et/ou uniquement ceux situés à une distance temporelle prédéterminée du temps $t_{1i}$).

Une fois les itérations terminées (test 608, sortie OK), il est possible de déterminer l'événement $e_2(q_j, t_{2j})$ minimisant une fonction coût E pour un événement $e_1(p_i, t_{1i})$ fixé (étape 609). La fonction coût peut être, par exemple, une somme simple ($E = E_T + E_M + E_G + E_I$) ou une somme pondérée ($E = \omega_T E_t + \omega_M E_M + \omega_G E_G + \omega_I E_I$) des composantes précédemment calculées (toute autre fonction faisant intervenir ces composantes est également possible).

Il a été constaté expérimentalement qu'une fonction coût prenant en compte une composante de luminance et/ou une composante de mouvement permettait d'augmenter significativement la précision des reconstructions 3D réalisées.

Une fois la minimisation réalisée, il est possible d'associer les points $p_i$ et $q_j$ (étape 610), et ainsi de calculer les distances ou la position dans l'espace du point **X(t)** de la scène observée représentatif des points associés $p_i$ et $q_j$ (étape 611).

Les distances calculées (ou la position du point **X(t)** dans l'espace) sont alors retournées (612).

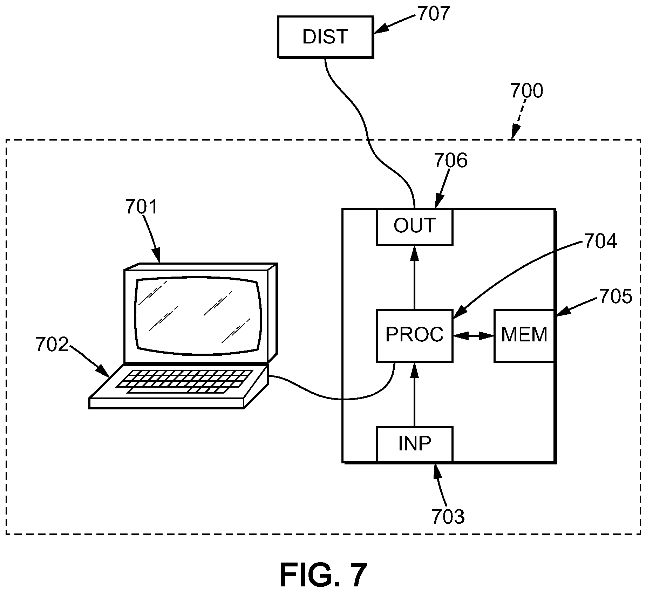

La figure 7 illustre un dispositif pour la mise en œuvre d'un mode de réalisation selon l'invention.

Dans ce mode de réalisation, le dispositif comporte un ordinateur 700, comprenant une mémoire 705 pour stocker des instructions permettant la mise en œuvre du procédé, les données de mesures reçues, et des données temporaires pour réaliser les différentes étapes du procédé tel que décrit précédemment.

L'ordinateur comporte en outre un circuit 704. Ce circuit peut être, par exemple :

- un processeur apte à interpréter des instructions sous la forme de programme informatique, ou

- une carte électronique dont les étapes du procédé de l'invention sont décrites dans le silicium, ou encore

- une puce électronique programmable comme une puce FPGA (pour « Field-Programmable Gate Array » en anglais).

Cet ordinateur comporte une interface d'entrée 703 pour la réception des événements des capteurs, et une interface de sortie 706 pour la fourniture des distances 707. Enfin, l'ordinateur peut comporter, pour permettre une interaction aisée avec un utilisateur, un écran 701 et un clavier 702. Bien entendu, le clavier est facultatif, notamment dans le cadre d'un ordinateur ayant la forme d'une tablette tactile, par exemple.

Par ailleurs, le schéma fonctionnel présenté sur la figure 6 est un exemple typique d'un programme dont certaines instructions peuvent être réalisées auprès de dispositif décrit. À ce titre, la figure 6 peut correspondre à l'organigramme de l'algorithme général d'un programme informatique au sens de l'invention.

Bien entendu, la présente invention ne se limite pas aux formes de réalisation décrites ci-avant à titre d'exemple ; elle s'étend à d'autres variantes.

D'autres réalisations sont possibles.

Par exemple, l'ordinogramme de la figure 6 peut également comporter une itération sur les événements $e_1(p_i,$

$t_{1i}$) afin d'associer plusieurs événements du premier capteur avec des événements du deuxième capteur.

**Revendications**

1. Procédé de reconstruction 3D d'une scène, le procédé comprenant :

   - réception (601) d'une première information asynchrone d'un premier capteur asynchrone (501) ayant une première matrice de pixels disposée au regard de la scène, la première information asynchrone comprenant, pour chaque pixel (p) de la première matrice, des premiers événements successifs provenant dudit pixel ;
   - réception (602) d'une deuxième information asynchrone d'un deuxième capteur asynchrone (502) ayant une deuxième matrice de pixels disposée au regard de la scène, la deuxième information asynchrone comprenant, pour chaque pixel (q) de la deuxième matrice, des deuxièmes événements successifs provenant dudit pixel, le deuxième capteur asynchrone étant distinct du premier capteur asynchrone; et
   - appariement (610) d'un premier événement parmi les premiers événements successifs avec un deuxième événement parmi les deuxièmes événements successifs en fonction d'une minimisation (609) d'une fonction coût (E) ; le procédé étant **caractérisé en ce que** la fonction coût comporte au moins :
   - une composante de luminance ($E_l$), ladite composante de luminance étant fonction au moins :

      - d'un premier signal de luminance (lu) provenant d'un pixel du premier capteur asynchrone convolué avec un noyau de convolution ($g_\sigma(t)$), la luminance dudit pixel étant fonction d'un écart entre des maximums ($t_{e-,u}$, $t_{e+,u}$) dudit premier signal ; et
      - d'un deuxième signal de luminance ($l_v$) provenant d'un pixel du deuxième capteur asynchrone convolué avec ledit noyau de convolution, la luminance dudit pixel étant fonction d'un écart entre des maximums ($t_{e-,v}$, $t_{e+,v}$) dudit deuxième signal ;

   - et une composante de mouvement ($E_M$), ladite composante de mouvement étant fonction au moins :

      - de valeurs temporelles relatives à la survenance d'événements spatialement localisés à une distance prédéterminée d'un pixel du premier capteur asynchrone; et
      - de valeurs temporelles relatives à la survenance d'événements spatialement localisés à une distance prédéterminée d'un pixel du deuxième capteur asynchrone;

   la fonction coût étant une somme d'au moins une composante de luminance et une composante de mouvement.

2. Procédé selon la revendication 1, dans lequel la fonction coût (E) comporte en outre:

   - une composante temporelle ($E_T$), ladite composante temporelle étant fonction d'une différence entre :

      - une valeur temporelle relative à un événement du premier capteur asynchrone; et
      - une valeur temporelle relative à un événement du deuxième capteur asynchrone.

3. Procédé selon l'une des revendications précédentes, dans lequel la fonction coût (E) comporte en outre:

   - une composante géométrique ($E_G$), ladite composante géométrique étant fonction :

      - d'une distance spatiale d'un pixel du deuxième capteur asynchrone à une droite épipolaire ou à une intersection épipolaire définie par au moins un pixel du premier capteur asynchrone.

4. Procédé selon l'une des revendications précédentes, dans lequel, le signal de luminance (lu, $l_v$) du pixel du premier capteur asynchrone et du pixel du deuxième capteur asynchrone comportant un maximum codant un temps de survenance d'une variation de luminance, le noyau de convolution est une gaussienne de variance prédéterminée.

5. Procédé selon l'une des revendications précédentes, dans lequel ladite composante de luminance ($E_l$) est fonction en outre :

   - de signaux de luminance de pixels du premier capteur asynchrone spatialement localisés à une distance prédéterminée du premier pixel du premier capteur asynchrone convolué avec le noyau de convolution ; et

- de signaux de luminance de pixels du deuxième capteur asynchrone spatialement localisés à une distance prédéterminée du deuxième pixel du deuxième capteur asynchrone convolué avec le noyau de convolution.

6. Procédé selon l'une des revendications précédentes, dans lequel ladite composante de mouvement ($E_M$) est fonction:

   - d'une valeur moyenne ($\overline{S}(\boldsymbol{p})$) des valeurs temporelles relatives à la survenance d'événements de pixels du premier capteur asynchrone spatialement localisés à une distance prédéterminée du pixel du premier capteur asynchrone; et
   - d'une valeur moyenne ($\overline{S}(\boldsymbol{q})$) des valeurs temporelles relatives à la survenance d'événements de pixels du deuxième capteur asynchrone spatialement localisés à une distance prédéterminée du pixel du deuxième capteur asynchrone.

7. Procédé selon l'une des revendications précédentes, dans lequel ladite composante de mouvement ($E_M$) est fonction, pour un temps donné :

   - pour chaque valeur temporelle courante relative à la survenance d'événements spatialement localisés à une distance prédéterminée d'un pixel du premier capteur asynchrone, d'une valeur fonction de manière décroissante d'une distance dudit temps donné à ladite valeur temporelle courante ; et
   - pour chaque valeur temporelle courante relative à la survenance d'événements spatialement localisés à une distance prédéterminée d'un pixel du deuxième capteur asynchrone, d'une valeur fonction de manière décroissante d'une distance dudit temps donné à ladite valeur temporelle courante.

8. Procédé selon l'une des revendications 1 à 6, dans lequel ladite composante de mouvement ($E_M$) est fonction :

   - d'une première convolution d'une fonction décroissante avec un signal comportant un Dirac pour chaque valeur temporelle relative à la survenance d'événements spatialement localisés à une distance prédéterminée d'un pixel du premier capteur asynchrone; et
   - d'une deuxième convolution d'une fonction décroissante avec un signal comportant un Dirac pour chaque valeur temporelle relative à la survenance d'événements spatialement localisés à une distance prédéterminée d'un pixel du deuxième capteur asynchrone.

9. Dispositif de reconstruction 3D d'une scène, le procédé comprenant :

   - une interface (703) pour la réception (601) d'une première information asynchrone d'un premier capteur asynchrone (501) ayant une première matrice de pixels disposée au regard de la scène, la première information asynchrone comprenant, pour chaque pixel (p) de la première matrice, des premiers événements successifs provenant dudit pixel ;
   - une interface (703) pour la réception (602) d'une deuxième information asynchrone d'un deuxième capteur asynchrone (502) ayant une deuxième matrice de pixels disposée au regard de la scène, la deuxième information asynchrone comprenant, pour chaque pixel (q) de la deuxième matrice, des deuxièmes événements successifs provenant dudit pixel, le deuxième capteur asynchrone étant distinct du premier capteur asynchrone; et
   - un processeur (704) adapté pour l'appariement (610) d'un premier événement parmi les premiers événements successifs avec un deuxième événement parmi les deuxièmes événements successifs en fonction d'une minimisation (609) d'une fonction coût (E) ; le dispositif étant **caractérisé en ce que** la fonction coût comporte au moins :
   - une composante de luminance ($E_I$), ladite composante de luminance étant fonction au moins :

     - d'un premier signal de luminance (Iu) provenant d'un pixel du premier capteur asynchrone convolué avec un noyau de convolution ($g_\sigma(t)$), la luminance dudit pixel étant fonction d'un écart entre des maximums ($t_{e-,u}$, $t_{e+,u}$) dudit premier signal ; et
     - d'un deuxième signal de luminance ($I_v$) provenant d'un pixel du deuxième capteur asynchrone convolué avec ledit noyau de convolution, la luminance dudit pixel étant fonction d'un écart entre des maximums ($t_{e-,v}$, $t_{e+,v}$) dudit deuxième signal ;

   - et une composante de mouvement ($E_M$), ladite composante de mouvement étant fonction au moins :

     - de valeurs temporelles relatives à la survenance d'événements spatialement localisés à une distance prédéterminée d'un pixel du premier capteur asynchrone; et

- de valeurs temporelles relatives à la survenance d'événements spatialement localisés à une distance prédéterminée d'un pixel du deuxième capteur asynchrone;

la fonction coût étant une somme d'au moins une composante de luminance et une composante de mouvement.

10. Produit programme informatique comportant des instructions pour la mise en œuvre du procédé selon l'une des revendications 1 à 8, lorsque ce programme est exécuté par un processeur.

**Patentansprüche**

1. Verfahren zur 3D-Rekonstruktion einer Szene, wobei das Verfahren aufweist:

   - Empfangen (601) einer ersten asynchronen Information aus einem ersten asynchronen Sensor (501), der eine gegenüber der Szene angeordnete erste Pixelmatrix hat, wobei die erste asynchrone Information für jedes Pixel (p) der ersten Matrix aufeinanderfolgende erste Ereignisse aufweist, die aus diesem Pixel stammen;
   - Empfangen (602) einer zweiten asynchronen Information aus einem zweiten asynchronen Sensor (502), der eine gegenüber der Szene angeordnete zweite Pixelmatrix hat, wobei die zweite asynchrone Information für jedes Pixel (q) der zweiten Matrix aufeinanderfolgende zweite Ereignisse aufweist, die aus diesem Pixel stammen, wobei der zweite asynchrone Sensor sich von dem ersten asynchronen Sensor unterscheidet; und
   - Paaren (610) eines ersten Ereignisses der aufeinanderfolgenden ersten Ereignisse mit einem zweiten Ereignis der aufeinanderfolgenden zweiten Ereignisse in Abhängigkeit von einer Minimierung (609) einer Kostenfunktion (E);

   wobei das Verfahren **dadurch gekennzeichnet ist, dass** die Kostenfunktion mindestens aufweist:
   * eine Luminanzkomponente ($E_1$), wobei die Luminanzkomponente abhängig ist mindestens von:

   - einem aus einem Pixel des ersten asynchronen Sensors stammenden ersten Luminanzsignal ($I_u$), gefaltet mit einem Faltungskern ($g_\sigma(t)$), wobei die Luminanz des Pixels abhängig von einer Spanne zwischen Maxima ($t_{e-,u}$, $t_{e+,u}$) des ersten Signals ist; und
   - einem aus einem Pixel des zweiten asynchronen Sensors stammenden zweiten Luminanzsignal ($I_v$), gefaltet mit dem Faltungskern, wobei die Luminanz des Pixels abhängig von einer Spanne zwischen Maxima ($t_{e-,v}$, $t_{e+,v}$) des zweiten Signals ist; und

   * eine Bewegungskomponente ($E_M$), wobei die Bewegungskomponente abhängig ist mindestens von:

   - Zeitwerten betreffend das Erscheinen von Ereignissen, die räumlich in einem vorgegebenen Abstand von einem Pixel des ersten asynchronen Sensors angeordnet sind; und
   - Zeitwerten betreffend das Erscheinen von Ereignissen, die räumlich in einem vorgegebenen Abstand von einem Pixel des zweiten asynchronen Sensors angeordnet sind;

   wobei die Kostenfunktion eine Summe mindestens einer Luminanzkomponente und einer Bewegungskomponente ist.

2. Verfahren nach Anspruch 1, in welchem die Kostenfunktion (E) ferner aufweist:

   - eine Zeitkomponente ($E_T$), wobei die Zeitkomponente abhängig ist von einer Differenz zwischen:

     - einem Zeitwert betreffend ein Ereignis des ersten asynchronen Sensors; und
     - einem Zeitwert betreffend ein Ereignis des zweiten asynchronen Sensors.

3. Verfahren nach einem der vorstehenden Ansprüche, wobei die Kostenfunktion (E) ferner aufweist:

   - eine geometrische Komponente ($E_G$), wobei die geometrische Komponente abhängig ist von:

     - einem räumlichen Abstand eines Pixels des zweiten asynchronen Sensors von einer epipolaren Geraden oder von einem epipolaren Schnittpunkt, der durch mindestens ein Pixel des ersten asynchronen Sensors definiert ist.

**4.** Verfahren nach einem der vorstehenden Ansprüche, in welchem das Luminanzsignal ($I_u$, $I_v$) des Pixels des ersten asynchronen Sensors und des Pixels des zweiten asynchronen Sensors ein Maximum aufweist, das eine Zeit eines Erscheinens einer Luminanzänderung kodiert, der Faltungskern eine vorgegebene Gaußsche Varianz ist.

**5.** Verfahren nach einem der vorstehenden Ansprüche, in welchem die Luminanzkomponente ($E_1$) ferner abhängig ist von:

- Luminanzsignalen von Pixeln des ersten asynchronen Sensors, die räumlich in einem vorgegebenen Abstand von dem ersten Pixel des ersten asynchronen Sensors angeordnet sind, gefaltet mit dem Faltungskern; und
- Luminanzsignalen von Pixeln des zweiten asynchronen Sensors, die räumlich in einem vorgegebenen Abstand von dem zweiten Pixel des zweiten asynchronen Sensors angeordnet sind, gefaltet mit dem Faltungskern.

**6.** Verfahren nach einem der vorstehenden Ansprüche, in welchem die Bewegungskomponente ($E_M$) abhängig ist von:

- einem Mittelwert ($\overline{S}(p)$) von Zeitwerten betreffend das Erscheinen von Ereignissen von Pixeln des ersten asynchronen Sensors, die räumlich in einem vorgegebenen Abstand von dem Pixel des ersten asynchronen Sensors angeordnet sind; und
- einem Mittelwert ($\overline{S}(q)$) von Zeitwerten betreffend das Erscheinen von Ereignissen von Pixeln des zweiten asynchronen Sensors, die räumlich in einem vorgegebenen Abstand von dem Pixel des zweiten asynchronen Sensors angeordnet sind.

**7.** Verfahren nach einem der vorstehenden Ansprüche, in welchem die Bewegungskomponente ($E_M$), für eine gegebene Zeit, abhängig ist von:

- für jeden aktuellen Zeitwert betreffend das Erscheinen von Ereignissen, die räumlich in einem vorgegebenen Abstand von einem Pixel des ersten asynchronen Sensors angeordnet sind, einem Wert, der in absteigender Weise abhängig von einem Abstand der gegebenen Zeit von dem aktuellen Zeitwert ist; und
- für jeden aktuellen Zeitwert betreffend das Erscheinen von Ereignissen, die räumlich in einem vorgegebenen Abstand von einem Pixel des zweiten asynchronen Sensors angeordnet sind, einem Wert, der in absteigender Weise abhängig von einem Abstand der gegebenen Zeit von dem aktuellen Zeitwert ist.

**8.** Verfahren nach einem der Ansprüche 1 bis 6, in welchem die Bewegungskomponente ($E_M$) abhängig ist von:

- einer ersten Faltung einer absteigenden Funktion mit einem Signal, das ein Dirac aufweist, für jeden aktuellen Zeitwert betreffend das Erscheinen von Ereignissen, die räumlich in einem vorgegebenen Abstand von einem Pixel des ersten asynchronen Sensors angeordnet sind; und
- einer zweiten Faltung einer absteigenden Funktion mit einem Signal, das ein Dirac aufweist, für jeden aktuellen Zeitwert betreffend das Erscheinen von Ereignissen, die räumlich in einem vorgegebenen Abstand von einem Pixel des zweiten asynchronen Sensors angeordnet sind.

**9.** Anordnung zur 3D Rekonstruktion einer Szene, wobei das Verfahren aufweist aufweist:

- eine Schnittstelle (703) für den Empfang (601) einer ersten asynchronen Information eines ersten asynchronen Sensors (501), der eine gegenüber der Szene angeordnete erste Pixelmatrix hat, wobei die erste asynchrone Information für jedes Pixel (p) der ersten Matrix aufeinanderfolgende erste Ereignisse aufweist, die aus diesem Pixel stammen;
- eine Schnittstelle (703) für den Empfang (602) einer zweiten asynchronen Information eines zweiten asynchronen Sensors (502), der eine gegenüber der Szene angeordnete zweite Pixelmatrix hat, wobei die zweite asynchrone Information für jedes Pixel (q) der zweiten Matrix aufeinanderfolgende zweite Ereignisse aufweist, die aus diesem Pixel stammen, wobei der zweite asynchrone Sensor sich von dem ersten asynchronen Sensor unterscheidet; und
- einen Prozessor (704), der zum Paaren (610) eines ersten Ereignisses der aufeinanderfolgenden ersten Ereignisse mit einem zweiten Ereignis der aufeinanderfolgenden zweiten Ereignisse in Abhängigkeit von einer Minimierung (609) einer Kostenfunktion (E) eingerichtet ist;

wobei die Anordnung **dadurch gekennzeichnet ist, dass** die Kostenfunktion mindestens aufweist:
* eine Luminanzkomponente ($E_I$), wobei die Luminanzkomponente abhängig ist mindestens von:

- einem aus einem Pixel des ersten asynchronen Sensors stammenden ersten Luminanzsignal ($I_u$), gefaltet mit einem Faltungskern ($g_\sigma(t)$), wobei die Luminanz des Pixels abhängig von einer Spanne zwischen Maxima ($t_{e-,u}$, $t_{e+,u}$) des ersten Signals ist; und
- einem aus einem Pixel des zweiten asynchronen Sensors stammenden zweiten Luminanzsignal ($I_v$), gefaltet mit dem Faltungskern, wobei die Luminanz des Pixels abhängig von einer Spanne zwischen Maxima ($t_{e-,v}$, $t_{e+,v}$) des zweiten Signals ist; und

\* eine Bewegungskomponente ($E_M$), wobei die Bewegungskomponente abhängig ist mindestens von:

- Zeitwerten betreffend das Erscheinen von Ereignissen, die räumlich in einem vorgegebenen Abstand von einem Pixel des ersten asynchronen Sensors angeordnet sind; und
- Zeitwerten betreffend das Erscheinen von Ereignissen, die räumlich in einem vorgegebenen Abstand von einem Pixel des zweiten asynchronen Sensors angeordnet sind;

wobei die Kostenfunktion eine Summe mindestens einer Luminanzkomponente und einer Bewegungskomponente ist.

**10.** Computerprogrammprodukt aufweisend Befehle zum Durchführen des Verfahrens nach einem der Ansprüche 1 bis 8, wenn dieses Programm von einem Prozessor ausgeführt wird.

**Claims**

**1.** Method of 3D reconstruction of a scene, the method comprising:

- reception (601) of a first piece of asynchronous information from a first asynchronous sensor (501) that has a first pixel matrix positioned opposite the scene, the first piece of asynchronous information comprising, for each pixel (p) of the first matrix, the first successive events coming from said pixel;
- reception (602) of a second piece of asynchronous information from a second asynchronous sensor (502) that has a second pixel matrix positioned opposite the scene, the second piece of asynchronous information comprising, for each pixel (q) of the second matrix, the second successive events coming from said pixel, the second asynchronous sensor being separate from the first asynchronous sensor;
- matching (610) of a first event from amongst the first successive events with a second event from amongst the second successive events depending on a minimisation (609) of a cost function (E);

the method being **characterized in that** the cost function comprises at least:

- a luminance component ($E_I$), said luminance component depending on at least:

  - a first luminance signal ($I_u$) coming from a pixel of the first asynchronous sensor convoluted with a convolution core ($g_\sigma(t)$), the luminance of said pixel depending on a difference between the maximums ($t_{e-,u}$, $t_{e+,u}$) of said first signal; and
  - a second luminance signal ($I_v$) coming from a pixel of the second asynchronous sensor convoluted with said convolution core, the luminance of said pixel depending on a difference between the maximums ($t_{e-,v}$, $t_{e+,v}$) of said second signal;

- and a movement component ($E_M$), said movement component depending on at least:

  - time values relating to the occurrence of events spatially located at a predetermined distance from a pixel of the first asynchronous sensor;
  - time values relating to the occurrence of events spatially located at a predetermined distance from a pixel of the second asynchronous sensor;
  wherein the cost function is a sum of at least a luminance component and a movement component.

**2.** Method according to claim 1, wherein the cost function (E) additionally comprises:

- a time component ($E_T$), said time component depending on a difference between:

- a time value relating to an event of the first asynchronous sensor;
- a time value relating to an event of the second asynchronous sensor.

3.  Method according to one of the preceding claims, wherein the cost function (E) additionally comprises:

   - a geometric component ($E_G$), said geometric component depending on:

      - a spatial distance from a pixel of the second asynchronous sensor at an epipolar straight line or at an epipolar intersection defined by at least one pixel of the first asynchronous sensor.

4.  Method according to one of the preceding claims, wherein, the luminance signal ($I_u$, $I_v$) of the pixel of the first asynchronous sensor and of the pixel of the second asynchronous sensor comprising a maximum, coding an occurrence time of a luminance variation, the convolution core is a predetermined Gaussian variance.

5.  Method according to one of the preceding claims, wherein said luminance component ($E_I$) additionally depends on:

   - luminance signals of pixels of the first asynchronous sensor, spatially located at a predetermined distance from the first pixel of the first asynchronous sensor, convoluted with the convolution core; and
   - luminance signals of pixels of the second asynchronous sensor, spatially located at a predetermined distance from the second pixel of the second asynchronous sensor, convoluted with the convolution core.

6.  Method according to one of the preceding claims, wherein said movement component ($E_M$) depends on:

   - an average value ($\overline{S}(\boldsymbol{p})$) of the time values relating to the occurrence of pixel events of the first asynchronous sensor, spatially located at a predetermined distance from the pixel of the first asynchronous sensor;
   - an average value ($\overline{S}(\boldsymbol{q})$) of the time values relating to the occurrence of pixel events of the second asynchronous sensor, spatially located at a predetermined distance from the pixel of the second asynchronous sensor.

7.  Method according to one of the preceding claims, wherein said movement component ($E_M$) depends on, for a given time:

   - for each current time value relating to the occurrence of events, spatially located at a predetermined distance from a pixel of the first asynchronous sensor, of a function value decreasing from a distance of said given time to said current time value; and
   - for each current time value relating to the occurrence of events, spatially located at a predetermined distance from a pixel of the second asynchronous sensor, of a function value decreasing from a distance of said given time to said current time value.

8.  Method according to one of the claims 1 to 6, wherein said movement component ($E_M$) depends on:

   - a first convolution of a decreasing function with a signal comprising a Dirac for each time value relating to the occurrence of events, spatially located at a predetermined distance from a pixel of the first asynchronous sensor;
   - a second convolution of a decreasing function with a signal comprising a Dirac for each time value relating to the occurrence of events, spatially located at a predetermined distance from a pixel of the second asynchronous sensor.

9.  Device for the 3D reconstruction of a scene, the method comprising:

   - an interface (703) for the reception (601) of a first piece of asynchronous information from a first asynchronous sensor (501) that has a first pixel matrix positioned opposite the scene, the first piece of asynchronous information comprising, for each pixel (p) of the first matrix, the first successive events coming from said pixel;
   - an interface (703) for the reception (602) of a second piece of asynchronous information from a second asynchronous sensor (502) that has a second pixel matrix positioned opposite the scene, the second piece of asynchronous information comprising, for each pixel (q) of the second matrix, the second successive events coming from said pixel, the second asynchronous sensor being separate from the first asynchronous sensor;
   - a processor (704) suitable for the matching (610) of a first event from amongst the first successive events with a second event from amongst the second successive events depending on a minimisation (609) of a cost function (E);

the device being **characterized in that** the cost function comprises at least:

- a luminance component ($E_I$), said luminance component depending on at least:

- a first luminance signal ($I_u$) coming from a pixel of the first asynchronous sensor, convoluted with a convolution core ($g_\sigma(t)$), the luminance of said pixel depending on a difference between the maximums ($t_{e-,u}$, $t_{e+,u}$) of said first signal; and
- a second luminance signal ($I_v$) coming from a pixel of the second asynchronous sensor, convoluted with said convolution core, the luminance of said pixel depending on a difference between the maximums ($t_{e-,v}$, $t_{e+,v}$) of said second signal;

- and a movement component ($E_M$), said movement component depending on at least:

- time values relating to the occurrence of events, spatially located at a predetermined distance from a pixel of the first asynchronous sensor;
- time values relating to the occurrence of event, spatially located at a predetermined distance from a pixel of the second asynchronous sensor;
wherein the cost function is a sum of at least a luminance component and a movement component.

**10.** Computer program product comprising instructions for the implementation of the method according to one of the claims 1 to 8, when this program is executed by a processor.

**FIG. 1**

**FIG. 2**

FIG. 3

**FIG. 4a**

FIG. 4b

FIG. 4c

EP 3 272 119 B1

501

502

$X(t)$

$P_2^v$

$P_\ell^u$

$R_u$

$\ell_{uv}$

$P_3^v$

$R_v$

(a)

$P_\ell^v$

## FIG. 5a

X

$P_2^u$

$\ell_{vu}$

$\ell_{wu}$

$R_u$

$P_\ell^u$

$P_\ell^w$

$\ell_{uw}$

$\ell_{vw}$

$R_w$

$\ell_{wv}$

$P_\ell^v$

$\ell_{uv}$

$R_v$

## FIG. 5b

601 {$e_1(p_i;t_{1i})$}    602 {$e_2(q_j;t_{2j})$}

SEL_COUP
$e(p_i;q_j)$ — 603

604 COMP_E$_{Gij}$    605 COMP_E$_{Tij}$    606 COMP_E$_{Mij}$    607 COMP_E$_{Iij}$

j+1    ? — 608

ok

MINIM_E — 609

APPAR_$p_i$_$q_j$ — 610

COMP_DIST_X — 611

DIST_X — 612

**FIG. 6**

**FIG. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **T. DELBRÜCK et al.** Activity-Driven, Event-Based Vision Sensors. *Proceedings of 2010 IEEE International Symposium on Circuits and Systems (ISCAS),* 2426-2429
- **ROGISTER et al.** *Asynchronous Event-Based Binocular Stereo Matching*

- **KOGLER et al.** *Event-Based Stereo Matching Approaches for Frameless Address Event Stereo Data*
- **POSCH et al.** *Retinomorphic Event-Based Vision Sensors: Bioinspired: Cameras With Spiking Output*